# EUROPÄISCHE PATENTANMELDUNG

(11) **EP 4 807 928 A1**
(43) Veröffentlichungstag der Anmeldung: **16.09.2026**
(21) Anmeldenummer: 26161280.8
(22) Anmeldetag: 27.02.2026
(51) Int. Cl.: H02H 9/04, H02H 3/04, H01C 7/12, H01T 1/14

(54) **ÜBERWACHUNGSGERÄT UND VERFAHREN ZUR ÜBERWACHUNG EINES ÜBERSPANNUNGSSCHUTZGERÄTS SOWIE BAUGRUPPE**

(30) Priorität: 07.03.2025 DE 102025108685
(71) Anmelder: DEHN SE, 92318 Neumarkt i.d. OPf. (DE)
(72) Erfinder: BÖHM, Thomas, 92318 Neumarkt i.d.OPf. (DE); HAAS, Sebastian, 92318 Neumarkt i.d.OPf. (DE); SCHARF, Manuel, 92318 Neumarkt i.d.OPf. (DE); ZÄUNER, Edmund, 92318 Neumarkt i.d.OPf. (DE)
(74) Vertreter: Prinz & Partner mbB

(57) **Zusammenfassung**

Die Erfindung betrifft ein Überwachungsgerät (14) zur Überwachung eines Überspannungsschutzgeräts (12). Das Überwachungsgerät (14) weist einen Anschluss (20) zum In-Reihe-Schalten mit dem Überspannungsschutzgerät (12) sowie einen Überlastschutz (22) auf, der eine Funkenstrecke (24) umfasst. Zudem hat das Überwachungsgerät (14) eine Detektionsschaltung (26), die eingerichtet ist, einen degradationsrelevanten Parameter zu erfassen. Das Überwachungsgerät (14) weist eine Lichtbogenerkennungseinheit (30) auf, die der Funkenstrecke (24) des Überlastschutzes (22) zugeordnet und eingerichtet ist, einen Lichtbogen zu erkennen. Ferner sind eine Baugruppe (10) und ein Verfahren zur Überwachung eines Überspannungsschutzgeräts (12) beschrieben.

## Beschreibung

Die Erfindung betrifft ein Überwachungsgerät zur Überwachung eines Überspannungsschutzgeräts, insbesondere zur Detektion einer Degradation, insbesondere eines Leckstroms, in einem Überspannungsschutzgerät. Darüber hinaus betrifft die Erfindung ein Verfahren zur Überwachung eines Überspannungsschutzgeräts mittels eines Überwachungsgeräts, insbesondere zur Detektion einer Degradation eines Überspannungsschutzgeräts bzw. eines Leckstroms in einem Überspannungsschutzgerät. Ferner betrifft die Erfindung eine Baugruppe mit einem Überspannungsschutzgerät und einem Überwachungsgerät.

Überspannungsschutzgeräte zum Überspannungsschutz sind aus dem Stand der Technik bekannt und werden in vielseitigen Gebieten eingesetzt. Ein Hauptanwendungsgebiet für den Überspannungsschutz, bei dem derartige Überspannungsschutzgeräte verwendet werden, ist an Einspeisepunkten elektrischer Energie in Gebäuden oder bei verzweigten Energieverteilungen.

Die Überspannungsschutzgeräte, die auch "surge protection device" (SPD) genannt werden, funktionieren grundsätzlich derart, dass die Überspannungsschutzgeräte im Falle einer transienten oder temporären Überspannung niederohmig werden, um die Energie eines Überspannungsimpulses abzuleiten. Überlast und Betriebszustände außerhalb der spezifizierten Nenndaten der Überspannungsschutzgeräte können ein Versagen der Überspannungsschutzgeräte zur Folge haben. In der Regel führt das Versagen eines Überspannungsschutzgeräts zu einem permanenten niederohmigen Verhalten, sodass vorgeschaltete Schutzorgane ("Over Current Protection" - OCP) wie Sicherungen oder Leitungsschutzschalter ("Miniatur Circuit Breaker" - MCB) auslösen. Zur Vermeidung des kompletten Spannungsausfalls durch Überstromabschaltung in der Energieverteilung werden bei Bedarf zusätzliche (Vor-)Sicherungen hinter der Verzweigung zum Überspannungsschutzgerät angeordnet.

Die Dimensionierung dieser (Vor-)Sicherungen ist jedoch kompliziert, da zwei Kriterien erfüllt sein müssen, die die richtige Dimensionierung erschweren. Einerseits dürfen die (Vor-)Sicherungen nicht zu klein dimensioniert werden, damit Impulsströme nicht zur Auslösung führen, und andererseits dürfen die jeweiligen (Vor-)Sicherungen nicht zu groß dimensioniert werden, um die Zerstörung eines defekten Überspannungsschutzgeräts durch hohe thermische Belastung zu vermeiden. Grundsätzlich sind derartige (Vor-)Sicherungen vorgesehen, um bei Strömen im Kiloampere-Bereich auszulösen.

Die Überspannungsschutzgeräte weisen Überspannungsschutzelemente auf, welche je nach Einsatz- bzw. Anwendungsgebiet unterschiedlich ausgebildet sein können. Bei den Überspannungsschutzelementen handelt es sich beispielsweise um Varistoren (MOV) für den Typ 2 und 3 des Überspannungsschutzes, wohingegen für den Typ 1 des Überspannungsschutzes typischerweise Gasableiter oder Funkenstrecken als Überspannungsschutzelemente zum Einsatz kommen. Die jeweiligen Überspannungsschutzelemente der Überspannungsschutzgeräte können mit der Zeit jedoch degradieren, also Alterungseffekten unterliegen bzw. defekt werden, wodurch ein Leckstrom entsteht. Die Degradation hat also zur Folge, dass das Überspannungsschutzgerät, welches in einem Auslieferungs- bzw. Neuzustand einen hohen elektrischen Innenwiderstand bei Betrieb an Netzspannung aufweist, einen geringeren elektrischen Innenwiderstand aufgrund der Degradierung hat. Der abnehmende elektrische Widerstand und der damit verbundene ansteigende Leckstrom führt im Überspannungsschutzgerät zu ansteigender Verlustleistung, die wiederum die Degradation des Überspannungsschutzelements beschleunigen kann. In der Folge kann eine thermische Zerstörung durch hohe Leckströme auftreten, sog. Thermisches Durchgehen ("thermal runaway").

Diesem Degradationseffekt des Überspannungsschutzgeräts, insbesondere der Überspannungsschutzelemente, wird heutzutage typischerweise damit begegnet, dass eine (thermische) Abtrennvorrichtung vorgesehen ist, welche ein langsames Altern des Überspannungsschutzgeräts, insbesondere eines überspannungsbegrenzenden Schutzelements (Überspannungsschutzelement), detektiert und die damit einhergehenden geringen Leckströme abschaltet, also Ströme in der Größenordnung von Milliampere bis zu zweistelligen Ampere.

Der Nutzer erhält bei ansteigendem Leckstrom durch das degradierende Überspannungsschutzelement erst Erkenntnis, nachdem die (thermische) Abtrennvorrichtung abgetrennt oder die (Vor-)Sicherung ausgelöst hat. Dies ist jedoch insofern nicht unbedeutend, da die (thermische) Abtrennvorrichtung für Ströme in der Größenordnung von Milliampere bis zu einstelligen Ampere vorgesehen ist, wohingegen die (Vor-)Sicherung erst im Kiloampere-Bereich auslöst. Das Überspannungsschutzgerät ist nach Auslösen dieser Organe nicht mehr funktionstüchtig, was zur Folge hat, dass die elektrische Anlage bis zum Austausch des Überspannungsschutzgerätes nicht mehr gegen Überspannungen geschützt ist. Daher werden heutzutage zusätzlich sogenannte Überwachungssysteme ("Monitoring Systeme") eingesetzt, die den Nutzer über den aktuellen Zustand des Überspannungsschutzgeräts informieren, insbesondere deren sehr fein detektierbare Degradation. Die aus dem Stand der Technik bekannten Lösungen sind jedoch aufwendig bzw. technisch komplex und verursachen daher hohe Kosten. Unabhängig von der Art des Überwachungssystems muss zudem sichergestellt sein, dass die Funktionsweise des Überwachungssystems gewährleistet ist.

Die Aufgabe der Erfindung ist es, eine kostengünstige und einfach zu realisierende Möglichkeit bereitzustellen, eine Degradation, also eine Alterung bzw. Defekt, eines Überspannungsschutzgeräts zu überwachen und den Zustand eines hierfür vorgesehenen Überwachungsgeräts zu erfassen.

Die Aufgabe wird erfindungsgemäß gelöst durch ein Überwachungsgerät zur Überwachung eines Überspannungsschutzgeräts. Das Überwachungsgerät weist einen Anschluss zum In-Reihe-Schalten mit dem Überspannungsschutzgerät auf. Das Überwachungsgerät hat einen Überlastschutz, der eine Funkenstrecke umfasst. Das Überwachungsgerät weist eine Detektionsschaltung auf, die eingerichtet ist, einen degradationsrelevanten Parameter zu erfassen. Das Überwachungsgerät weist eine Lichtbogenerkennungseinheit auf, die der Funkenstrecke des Überlastschutzes zugeordnet und eingerichtet ist, einen Lichtbogen zu erkennen.

Ferner wird die Aufgabe erfindungsgemäß gelöst durch ein Verfahren zur Überwachung eines Überspannungsschutzgeräts mittels eines Überwachungsgeräts. Ein degradationsrelevanter Parameter wird erfasst, um eine Alterung und/oder einen Defekt des Überspannungsschutzgeräts zu detektieren, also eine Degradation. Ein Lichtbogen in einer Funkenstrecke eines Überlastschutzes des Überwachungsgeräts wird erkannt.

Der Grundgedanke der Erfindung ist es, eine zweistufige Überwachung für das Überspannungsschutzgerät zu schaffen. Hierzu wird das Überspannungsschutzgerät permanent überwacht, um auftretende Leckströme bei einem degradierten, also einem verschlechterten, gealterten bzw. defekten, Überspannungsschutzgerät zu erfassen und eine Lichtbogenerkennung mittels der Lichtbogenerkennungseinheit zu aktivieren, sodass ein auftretender Lichtbogen bei dem Überwachungsgerät erfasst werden kann. Der Lichtbogen entsteht nur dann, wenn ein Überspannungsereignis vorliegt und das Überwachungsgerät das Überspannungsschutzgerät schützt bzw. beim Ableiten der Überspannung unterstützt. Hierzu ist die Detektionsschaltung des Überwachungsgeräts eingerichtet, den degradationsrelevanten Parameter zu erfassen, insbesondere den degradationsrelevanten Parameter des Überspannungsschutzgeräts, mit dem das Überwachungsgerät in Reihe geschaltet ist.

Grundsätzlich kann das Überwachungsgerät also das zu überwachende Überspannungsschutzgerät schützen, wobei das Überwachungsgerät einfach aufgebaut und kostengünstig herstellbar ist, insbesondere im Vergleich zu aus dem Stand der Technik bekannten Überwachungssystemen.

Die Überwachung basiert dabei beispielsweise darauf, dass ein Leckstrom durch das Überspannungsschutzgerät und das hiermit in Serie verbundene Überwachungsgerät fließt, insbesondere die Detektionsschaltung des Überwachungsgeräts, sofern das Überspannungsschutzgerät degradiert sein sollte. In Abhängigkeit der Degradation des Überspannungsschutzgeräts ergibt sich ein unterschiedlicher Leckstrom, sodass auf den Degradationsgrad des Überspannungsschutzgeräts rückgeschlossen werden kann.

Mit anderen Worten kann der degradationsrelevante Parameter ein Leckstrom sein, der aufgrund der Degradation des Überspannungsschutzgeräts fließt und von der Detektionsschaltung des Überwachungsgeräts entsprechend erfasst wird, da das Überwachungsgerät mit dem Überspannungsschutzgerät in Reihe geschaltet ist.

Generell handelt es sich bei dem Überwachungsgerät demnach um ein Überwachungs- und Sicherungsgerät für das Überspannungsschutzgerät, wobei das Überwachungsgerät und das Überspannungsschutzgerät in Reihe geschaltet sind, insbesondere das Überspannungsschutzgerät und der Überlastschutz des Überwachungsgeräts. Es kann also vorgesehen sein, dass das Überwachungsgerät eine bisher verwendete (Vor-)Sicherung ersetzt. Folglich kann das Überwachungsgerät auch als (Vor-)Sicherung angesehen werden.

Dies ist insofern von Bedeutung, da das Überwachungsgerät auch das eingangs genannte Problem der korrekten Dimensionierung der (Vor-)Sicherung des Überspannungsschutzgeräts löst. Das Überwachungsgerät lässt sich zudem an die unterschiedlichen Technologien der Überspannungsschutzgeräte anpassen bzw. entsprechend konfigurieren. Dies geschieht vorzugsweise herstellerseitig. Das Überspannungsschutzgerät kann demnach beliebiger Technologie sein, also einen Metalloxidvaristor (MOV) oder einen Gasableiter bzw. eine Funkenstrecke aufweisen.

Die mittels des Überwachungsgeräts mögliche frühzeitige Erkennung einer Degradation des Überspannungsschutzgeräts bietet zudem den Vorteil, etwaige Ausfallzeiten zu reduzieren, da das Überspannungsschutzgerät noch vor dessen Ausfall aufgrund einer zu hohen Degradation getauscht werden kann.

Da das Überwachungsgerät den Überlastschutz aufweist, der auch als kurzschlussstromlöschfähiges und/oder überspannungsschaltendes Bauteil bezeichnet werden kann, ist das Überwachungsgerät grundsätzlich eingerichtet, einen Fehler und/oder Kurzschlussstrom von einigen Ampere bis zum maximalen Kurzschlussstrom zu löschen bzw. zu unterbrechen.

Hierbei sind die folgenden Fälle zu unterscheiden:
Das Überspannungsschutzgerät ist grundsätzlich intakt. Beim Eintreten einer Überspannung leitet der Überlastschutz den ankommenden Überspannungsimpuls an das nachfolgende Überspannungsschutzgerät weiter. Das Überspannungsschutzgerät leitet die Überspannung dann ordnungsgemäß ab.

Das Überspannungsschutzgerät ist gealtert und/oder defekt. Beim Eintreten einer Überspannung wird der Überspannungsimpuls an das Überspannungsschutzgerät weitergeleitet. Da das Überspannungsschutzgerät gealtert bzw. defekt ist, steigt der Strom an, sodass der Überlastschutz aktiviert wird, also ein Lichtbogen entlang der Funkenstrecke des Überlastschutzes erzeugt wird. Der Überspannungsimpuls wird dabei durch den Überlastschutz gelöscht bzw. abgeleitet.

Wie vorstehend erläutert, kann der Überlastschutz im Falle einer Überspannung simultan mit dem Überspannungsschutzgerät schalten, um einen Impuls- bzw. Stoßstrom abzuleiten.

Der Überlastschutz kommt also insbesondere dann zum Tragen, wenn das nachgeschaltete Überspannungsschutzgerät degradiert ist, um beispielsweise einen Folgestrom zu löschen. Sofern das Überspannungsschutzgerät nicht degradiert ist, kann die entsprechende Funktion noch vom Überspannungsschutzgerät übernommen werden, sodass über den Überlastschutz lediglich ein niederohmiger Pfad für die Impulsstromableitung gegeben ist.

Die Detektionsschaltung stellt nun sicher, dass ein gealtertes Überspannungsschutzgerät, welches aber noch nicht defekt ist, frühzeitig erkannt wird, nämlich im Normalbetrieb bzw. bei einer normalen Betriebsspannung, also wenn kein Überspannungsimpuls vorliegt.

Dies erfolgt beispielsweise dadurch, dass der gegen Erde laufende Leckstrom durch das Überspannungsschutzgerät vom Überwachungsgerät, insbesondere dessen Detektionsschaltung, im Normalbetrieb bzw. bei einer normalen Betriebsspannung erkannt wird.

Alternativ oder ergänzend kann ein veränderter Spannungsabfall über das Überspannungsschutzgerät und/oder den Überlastschutz detektiert werden, was mit dem Leckstrom bzw. der Degradation des Überspannungsschutzgeräts einhergeht. Der Leckstrom ist dabei nicht groß genug, um den Überlastschutz, also das kurzschlussstromlöschfähige und/oder überspannungsschaltende Bauteil, zu aktivieren bzw. auszulösen. Ferner ist der Leckstrom nicht groß genug, um eine optional vorgeschaltete (thermische) Abtrennvorrichtung auslösen zu lassen.

Das Überwachungsgerät kann demnach eine Parallelschaltung aufweisen, die den Überlastschutz und die Detektionsschaltung in parallelen Zweigen umfasst. Insofern sind der Überlastschutz und die Detektionsschaltung parallel zueinander geschaltet. Der Überlastschutz und die Detektionsschaltung sind jedoch jeweils mit dem Überspannungsschutzgerät in Reihe geschaltet. Der bei einer Degradation des Überspannungsschutzgeräts im Normalbetrieb vorliegende Leckstrom wird über die Detektionsschaltung geleitet, da das kurzschlussstromlöschfähige und/oder überspannungsschaltende Bauteil im Normalbetrieb in einem nichtleitenden Zustand ist.

Das Überwachungsgerät lässt sich kostengünstig realisieren, da die Detektionsschaltung parallel zu dem Überlastschutz geschaltet ist, weswegen die Detektionsschaltung nur bis zum Schutzpegel des Überlastschutzes ausgelegt werden muss. Zudem kann das Überwachungsgerät, insbesondere die Detektionsschaltung, kompakt und platzsparend aufgebaut sein.

Die zusätzliche Lichtbogenerkennungseinheit stellt dann sicher, dass das Auslösen des Überlastschutzes detektiert werden kann, da beim Auslösen des Überlastschutzes ein Lichtbogen über die Funkenstrecke auftritt, der entsprechend detektiert wird.

Insofern werden zwei Kriterien herangezogen, nämlich der degradationsrelevante Parameter, der einen Rückschluss auf den Zustand des Überspannungsschutzgeräts zulässt, sowie das Auftreten des Lichtbogens über die Funkenstrecke des Überwachungsgeräts.

Generell kann eine Degradation des Überspannungsschutzgeräts also eine Verschlechterung des Überspannungsschutzgeräts sein, die alters- bzw. verschleißbedingt ist. Auch kann die Degradation des Überspannungsschutzgeräts ein Defekt des Überspannungsschutzgeräts umfassen, der bspw. die Folge einer Alterung bzw. eines Verschleißes ist, aber auch aufgrund eines singulären Ereignisses eingetreten ist.

Wie vorstehend schon erläutert, kann die Degradation des Überspannungsschutzgeräts durch einen fließenden Leckstrom erfasst werden. Mit anderen Worten entspricht der Leckstrom demnach dem degradationsrelevanten Parameter. Der Leckstrom kann durch eine verringerte Impedanz des Überspannungsschutzgeräts hervorgerufen werden, bspw. aufgrund einer Alterung des Überspannungsschutzgeräts, aber auch durch eine (Impuls-)Überlastung, also einen Impedanzsprung, wodurch das Überspannungsschutzgerät dauerhaft in einen undefinierten nierohmigen Zustand versetzt worden ist.

Ein Aspekt sieht vor, dass die Detektionsschaltung eingerichtet ist, die Lichtbogenerkennungseinheit zu aktivieren, nachdem der degradationsrelevante Parameter einen Schwellenwert erreicht hat. Der Aspekt sieht also vor, dass eine Lichtbogenerkennungseinheit zum Erkennen des Lichtbogens nur aktiviert wird, wenn der degradationsrelevante Parameter einen Schwellenwert überschritten hat. Die permanente Überwachung des Überspannungsschutzgeräts stellt sicher, dass rechtzeitig erkannt wird, ob das Überspannungsschutzgerät noch funktionsfähig ist, also weder defekt noch verschlechtert. Hierzu wird der erfasste degradationsrelevante Parameter mit einem vordefinierten Schwellenwert verglichen. Sobald der erfasste degradationsrelevante Parameter den Schwellenwert erreicht hat, ist davon auszugehen, dass das Überspannungsschutzgerät gealtert und/oder defekt ist. Da beim Eintreten einer Überspannung der Überlastschutz aktiv werden würde, also ein Lichtbogen entlang der Funkenstrecke des Überlastschutzes erzeugt werden würde, wird die Lichtbogenerkennungseinheit aktiviert, um eine auftretende Überspannung nur für den Fall des nicht mehr funktionsfähigen Überspannungsschutzgeräts zu detektieren. Wenn der degradationsrelevante Parameter den Schwellenwert noch nicht erreicht hat, kann das Überspannungsschutzgerät die Überspannung noch ableiten, weswegen die Lichtbogenerkennungseinheit nicht aktiv sein muss, um ein Überspannungsereignis im Falle eines funktionsfähigen Überspannungsschutzgeräts zu detektieren.

Insbesondere ist die Detektionsschaltung also eingerichtet, den erfassten degradationsrelevanten Parameter mit wenigstens einem Schwellenwert und/oder einem Grenzwert zu vergleichen. Mithilfe des wenigstens einen Schwellenwerts kann der Degradationsgrad des Überspannungsschutzgeräts festgestellt werden, also beispielsweise eine niedrige Degradation (geringe Alterung), eine mittlere Degradation (mittlere Alterung) bzw. eine hohe Degradation (starke Alterung). Für die unterschiedlichen Degradationsgrade, die festgestellt werden können, ist beispielsweise jeweils ein entsprechender Schwellenwert vorgesehen, sodass insgesamt mehrere Schwellenwerte vorhanden sind.

Darüber hinaus kann die Detektionsschaltung den erfassten degradationsrelevanten Parameter mit einem Grenzwert vergleichen. Der Grenzwert stellt eine absolute Grenze dar, die für die Funktionsweise des Überspannungsschutzgeräts relevant ist. Wird der Grenzwert überschritten, so wird das Überspannungsschutzgerät als defekt angesehen. Sollte der Grenzwert wider Erwarten überschritten werden, so kann das Überwachungsgerät entsprechende Maßnahmen einleiten, um das Überspannungsschutzgerät außer Betrieb zu nehmen, beispielsweise vom Überlastschutz des Überwachungsgeräts abzutrennen, sodass das Überwachungsgerät auch im Überspannungsfall nicht aktiv werden kann. Dies kann auch beim Erreichen des Schwellenwerts schon der Fall sein, sofern dies gewünscht ist.

Der wenigstens eine Schwellenwert sowie der Grenzwert können in einem Speicher des Überwachungsgeräts hinterlegt sein, auf den die Detektionsschaltung zugreifen kann. Insbesondere lassen sich der wenigstens eine Schwellenwert und/oder der Grenzwert einstellen, um das Verhalten des Überwachungsgeräts anzupassen.

Ein weiterer Aspekt sieht vor, dass das Überwachungsgerät eine Abschalteinrichtung aufweist, die von der Detektionsschaltung und/oder der Lichtbogenerkennungseinheit ansteuerbar ist, insbesondere nachdem die Lichtbogenerkennungseinheit einen Lichtbogen erkannt hat. Mit anderen Worden können bzw. kann das Überwachungsgerät abgeschaltet und/oder das Überspannungsschutzgerät abgetrennt werden, wenn der Lichtbogen erkannt worden ist. Die Abschalteinrichtung kann das Überwachungsgerät abschalten und/oder das Überspannungsschutzgerät vom Überlastschutz des Überwachungsgeräts abtrennen. Sofern das Überwachungsgerät abgeschaltet wird, stellt der Überlastschutz nur noch eine Notlaufeigenschaft als Schutz zur Verfügung. Die Notlaufeigenschaft kann eine Folgestromlöschfähigkeit umfassen, welche vom Überlastschutz noch gewährleistet wird, insbesondere der Funkenstrecke. Das Abschalten des Überwachungsgeräts kann unter anderem darin bestehen, dass eine Triggerschaltung deaktiviert wird, die als Triggerhilfe für die Funkenstrecke des Überlastschutzes dient.

Die Ansteuerung der Abschalteinrichtung kann über die Detektionsschaltung erfolgen, sofern diese von der Lichtbogenerkennungseinheit eine Rückmeldung erhält, dass ein Lichtbogen erfasst wurde. Alternativ kann die Abschalteinrichtung auch direkt von der Lichtbogenerkennungseinheit angesteuert werden, sofern ein Lichtbogen erfasst wurde.

Insbesondere umfasst die Abschalteinrichtung eine Abtrennvorrichtung, einen Elektroden-Aktor, einen Isolator-Aktor und/oder einen Trigger-Aktor. Der Trigger-Aktor kann zum Deaktivieren der Triggerschaltung dienen. Beispielsweise wird eine Triggerelektrode mittels des Trigger-Aktors bewegt, sodass die Triggerung der Funkenstrecke nicht mehr möglich ist. Alternativ oder ergänzend kann zumindest eine Elektrode der Funkenstrecke über den Elektroden-Aktor bewegt werden, um das Ansprechverhalten der Funkenstrecke zu verändern. Dies lässt sich auch dadurch erreichen, dass ein Isolator eingebracht wird, beispielsweise mittels des Isolator-Aktors. Die Abtrennvorrichtung kann einer Verbindungsleitung zum Überspannungsschutzgerät zugeordnet sein, um diese zu trennen, wobei das Überspannungsschutzgerät beim Trennen der Verbindungsleitung vom Überlastschutz des Überwachungsgeräts dauerhaft abgetrennt wird.

Gemäß einem weiteren Aspekt weist die Lichtbogenerkennungseinheit eine Photodiode auf, die bei der Detektion eines Lichtbogens in einen elektrisch leitenden Zustand übergeht. Hierdurch wird also ein Erkennungssignal erzeugt, welches genutzt werden kann, um beispielsweise die Abschalteinrichtung anzusteuern. In einem Ausgangszustand ist die Photodiode hochohmig ausgebildet, wobei die Photodiode bei der Detektion des Lichtbogens niederohmig wird.

Grundsätzlich wird der auftretende Lichtbogen also optisch durch die Lichtbogenerkennungseinheit erkannt.

Gemäß einer Ausführungsform ist die Lichtbogenerkennungseinheit auf einer Platine angeordnet, die in einer Aufnahme eines Gehäuses aufgenommen ist, das die Funkenstrecke umgibt. Das Gehäuse weist demnach einen Steckplatz für die Lichtbogenerkennungseinheit auf, insbesondere die Platine der Lichtbogenerkennungseinheit, welche in die Aufnahme eingeschoben wird. Das Gehäuse kann zudem einen Anschlag für die Platine aufweisen, über den sichergestellt ist, dass die Platine bzw. die Lichtbogenerkennungseinheit an der gewünschten Position im Gehäuse angeordnet ist. Insbesondere ist die Photodiode der Lichtbogenerkennungseinheit dann in Bezug auf die Funkenstrecke optimal ausgerichtet, um einen auftretenden Lichtbogen sicher optisch zu erfassen.

Gemäß einer anderen Ausführungsform ist die Lichtbogenerkennungseinheit auf einer Platine angeordnet ist, die über einen Adapter außenseitig an einem Gehäuse angeordnet ist, das die Funkenstrecke umgibt. Hierdurch ist sichergestellt, dass die Lichtbogenerkennungseinheit keinen thermischen Belastungen der Funkenstrecke ausgesetzt ist, da die Lichtbogenerkennungseinheit vom Gehäuse geschützt ist. Im Gehäuse kann ein Sichtfenster und/oder eine Vertiefung vorgesehen sein, also ein Bereich mit verringerter Materialstärke, um sicherzustellen, dass die Lichtbogenerkennungseinheit, insbesondere die Photodiode, den auftretenden Lichtbogen erkennt. Mit anderen Worten ist es aufgrund der Helligkeit des Lichtbogens möglich, diesen sogar durch das Material des Gehäuses zu erkennen.

Insbesondere ist die Lichtbogenerkennungseinheit galvanisch vom Überlastschutz getrennt. Die galvanische Trennung stellt die Betriebssicherheit der Lichtbogenerkennungseinheit sicher.

Das Überwachungsgerät weist eine Statusanzeige und/oder eine Kommunikationsschnittstelle auf. Es können bzw. kann also ein Status des Überspannungsschutzgeräts und/oder ein Status des Überwachungsgeräts am Überwachungsgerät selbst angezeigt werden. Die Statusanzeige ist unter anderem eingerichtet, das Vorliegen eines Leckstroms im Überspannungsschutzgerät anzuzeigen. Die Statusanzeige ist zudem eingerichtet, einen Status des Überwachungsgeräts anzuzeigen, also einen durch die Lichtbogenerkennungseinheit erfassten Lichtbogen. Insbesondere umfasst die Statusanzeige eine Leuchte, beispielsweise eine LED, oder einen Bildschirm. Insofern ist es möglich, dass der Nutzer direkt über die Degradation des Überspannungsschutzgeräts am (vorgeschalteten) Überwachungsgerät informiert wird, da eine entsprechende Anzeige am Überwachungsgerät erfolgt. Es handelt sich bei dem Überwachungsgerät daher um ein Warngerät, welches den Nutzer vor einer erkannten Degradation des Überspannungsschutzgeräts frühzeitig warnt. Hierdurch kann der Nutzer veranlasst werden, entsprechende Gegenmaßnahmen einzuleiten, beispielsweise das degradierte Überspannungsschutzgerät rechtzeitig durch ein neues Überspannungsschutzgerät auszutauschen, bevor das degradierte Überspannungsschutzgerät ausfällt.

Die Detektionsschaltung kann eingerichtet sein, einem von einer Degradation des Überspannungsschutzgeräts abhängigen Anzeigemodus anzusteuern. Hierbei kann eine Farbe, eine Helligkeit und/oder eine Blinkfrequenz angesteuert werden. Über die unterschiedlichen Anzeigemodi ist sichergestellt, dass der Benutzer über den Degradationsgrad des Überspannungsschutzgeräts in verständlicher Weise informiert wird, sodass dieser schnell und intuitiv erkennen kann, wie stark das Überspannungsschutzgerät degradiert ist. Die Farben grün, gelb und rot stellen dabei typische Indikationsfarben dar, um den Degradationsgrad farblich anzuzeigen. Ebenso kann eine Blinkgeschwindigkeit intuitiv darüber Aufschluss geben, wie hoch der Degradationsgrad ist, beispielsweise langsam blinkend für einen geringen Degradationsgrad bzw. schnell blinkend für einen hohen Degradationsgrad. Ein Dauerleuchten kann dann ein defektes Überspannungsschutzgerät anzeigen, also wenn der Grenzwert überschritten worden ist.

Alternativ oder ergänzend kann die entsprechende Information an ein zum Überwachungsgerät separat ausgebildetes Gerät weitergeleitet werden, indem die Information über die Kommunikationsschnittstelle übermittelt wird. Das zum Überwachungsgerät separat ausgebildete Gerät kann eine Leitstelle sein, die Informationen von mehreren Geräten erhält und zentral verarbeitet.

Auch kann vorgesehen sein, dass die Detektionsschaltung den degradationsrelevanten Parameter lediglich erfasst und über die Kommunikationsschnittstelle des Überwachungsgeräts an eine in Bezug auf das Überwachungsgerät externe Auswertereinheit übermittelt, die den erfassten degradationsrelevanten Parameter extern verarbeitet, also außerhalb des Überwachungsgeräts, um eine Degradation des Überspannungsschutzgeräts festzustellen. Die separat ausgebildete Auswertereinheit kann demnach den Speicher umfassen, in dem der zumindest eine Schwellenwert hinterlegt ist.

Grundsätzlich kann das Überwachungsgerät das Vorliegen einer Degradation des Überspannungsschutzgeräts anzeigen und/oder fernmelden, um den Betreiber entsprechend zu informieren.

Eine Ausführungsform sieht vor, dass die Detektionsschaltung parallel zum Überlastschutz geschaltet ist, wobei die Detektionsschaltung eine Messelektronik umfasst, die eingerichtet ist, den degradationsrelevanten Parameter zu erfassen. Insbesondere umfasst die Detektionsschaltung zumindest einen Messkondensator mit einer Messkapazität, der mit dem Überspannungsschutzgerät in Serie schaltbar ist. Der Leckstrom wird also über die Detektionsschaltung geleitet, die den Messkondensator mit der Messkapazität aufweist. Der Leckstrom hat zur Folge, dass am Messkondensator eine unterschiedliche Spannung anliegt. Dies liegt daran, dass die Degradation mit einem elektrischen Innenwiderstand des Überspannungsschutzgeräts einhergeht, sodass die am Messkondensator anliegende Spannung demnach einen Rückschluss auf den elektrischen Innenwiderstand des Überspannungsschutzgeräts zulässt, also die Degradation des Überspannungsschutzgeräts. Bei der am Messkondensator mit der Messkapazität anliegenden Spannung handelt es sich also um eine widerstandsabhängige Spannung, nämlich eine vom elektrischen Innenwiderstand des Überspannungsschutzgeräts abhängige Spannung.

Die Detektionsschaltung, die eingerichtet ist, den degradationsrelevanten Parameter zu erfassen, kann einen Mikrocontroller (µC) umfassen, welcher die entsprechende Messung des degradationsrelevanten Parameters veranlasst.

Grundsätzlich kann die Detektionsschaltung, insbesondere der Mikrocontroller, eingerichtet sein, einen Messalgorithmus abzuarbeiten, beispielsweise periodisch. Dies kann in Firmware erfolgen. Zwischen den Messphasen kann die Firmware die Detektionsschaltung, insbesondere den Mikrocontroller, in einen Schlafmodus versetzten, wodurch die Detektionsschaltung energiesparend umgesetzt ist.

Eine andere Ausführungsform sieht vor, dass die Detektionsschaltung eine Auswerteeinheit aufweist, die mit einer Leitung zwischen dem Überlastschutz und dem Anschluss verbunden ist, um einen Spannungsabfall über den Überlastschutz zu erfassen und auszuwerten, um den degradationsrelevanten Parameter zu erfassen. Die Degradation des Überspannungsschutzgeräts kann auch über einen veränderten Spannungsabfall über das Überspannungsschutzgerät und/oder über den Überlastschutz festgestellt werden, insbesondere die veränderte Spannungsaufteilung über diese Komponenten, die in Reihe geschaltet sind. Die Detektionsschaltung kann hierzu eine Brückenschaltung umfassen, die sowohl vor dem Überlastschutz, zwischen dem Überlastschutz und dem Überspannungsschutzgerät sowie nach dem Überspannungsschutzgerät einen entsprechenden Abgriff aufweist, um so den Spannungsabfall über den Überlastschutz und/oder den Spannungsabfall über das Überspannungsschutzgerät erfassen zu können.

Die Auswerteeinheit kann durch einen Mikrocontroller (µC) ausgebildet sein.

Generell ist die Detektionsschaltung eingerichtet, einen Leckstrom bzw. Spannungsabfallveränderung derart zeitlich zu erkennen, dass ein Betreiber in der Lage ist, das Überspannungsschutzgerät auszutauschen, bevor eine mit dem Überspannungsschutzgerät geschützte elektrische Anlage ohne Überspannungsschutz betrieben werden muss. Mit anderen Worten ist sichergestellt, dass der Betreiber frühzeitig informiert wird, sodass es dem Betreiber möglich ist, einen Austausch des Überspannungsschutzgeräts vorzunehmen, bevor die elektrische Anlage ungeschützt ist.

Die rechtzeitige Erkennung durch die Detektionsschaltung bedeutet, dass die Detektion erfolgt, bevor die Abschalteinrichtung aktiviert wird, was zur Folge hätte, dass die elektrische Anlage ohne vollständigen Überspannungsschutz betrieben würde.

Als degradationsrelevanter Parameter kann die am Messkondensator anliegende Spannung direkt erfasst werden. Alternativ oder ergänzend kann eine Oszillatorfrequenz von der Detektionsschaltung erfasst werden, insbesondere von der Messelektronik. Hierzu wird ein Schwingkreis (RC-Glied) des Überwachungsgeräts in Schwingung versetzt, wobei die sich ausbildende Frequenz abhängig vom Innenwiderstand des Überspannungsschutzgeräts ist. Der Schwingkreis umfasst dabei den Messkondensator mit der Messkapazität. Insofern ist der Messkondensator in die Bestimmung des degradationsrelevanten Parameters eingebunden, unabhängig davon, ob nun die am Messkondensator anliegende Spannung direkt oder eine Oszillatorfrequenz als degradationsrelevanter Parameter erfasst wird. Ferner kann der degradationsrelevante Parameter der Spannungsabfall über den Überlastschutz und/oder der Spannungsabfall über das Überspannungsschutzgerät sein, da der entsprechende Spannungsabfall ebenfalls vom Leckstrom durch das Überspannungsschutzgerät abhängt, also von der Degradation des Überspannungsschutzgeräts.

Grundsätzlich lässt sich somit ein dreistufiger Ansatz verfolgen, da gemäß einer ersten Stufe der Zustand des Überspannungsschutzgeräts kontinuierlich überwacht wird, also der degradationsrelevante Parameter erfasst wird. Dabei kann der degradationsrelevante Parameter mit zumindest einem Schwellenwert verglichen werden.

Sollte der Schwellenwert erreicht worden sein, so kann die zweite Stufe aktiviert werden.

In der zweiten Stufe wird die Lichtbogenerkennungseinheit aktiviert, sodass ein Lichtbogen entlang der Funkenstrecke erfasst werden kann. Typischerweise tritt der Lichtbogen bei einem Impuls (8/20-Impuls), einem Blitzimpuls (10/350-Impuls) oder einem Netzfolgestrom auf, was entsprechend von der Lichtbogenerkennungseinheit erfasst werden kann.

Sollte die aktvierte Lichtbogenerkennungseinheit den Lichtbogen erfassen, wird die dritte Stufe aktiviert.

In der dritten Stufe wird ein Netzfolgestrom gelöscht und die Detektionsschaltung steuert die Abschalteinrichtung an, um das Überwachungsgerät abzuschalten und/oder das Überspannungsschutzgerät abzutrennen.

Die Aktivierung der jeweiligen Stufen, insbesondere der zweiten Stufe bzw. der dritten Stufe, kann über die Statusanzeige direkt angezeigt und/oder die Kommunikationsschnittstelle indirekt ausgegeben werden. Ferner kann in der zweiten Stufe der jeweilige Degradationsgrad über die Ansteuerung der Statusanzeige angezeigt werden, also ein geringer Degradationsgrad, ein mittlerer Degradationsgrad oder ein hoher Degradationsgrad.

Es ist zudem eine Baugruppe mit einem Überspannungsschutzgerät und einem Überwachungsgerät der zuvor genannten Art vorgesehen. Das Überspannungsschutzgerät und das Überwachungsgerät sind in Serie geschaltet. Die zuvor genannten Vorteile ergeben sich in analoger Weise für die Baugruppe.

Bei der Baugruppe kann vorgesehen sein, dass das Überspannungsschutzgerät und das Überwachungsgerät zwei separat ausgebildete Geräte sind, die jeweils ein eigenes Gehäuse haben.

Alternativ kann auch vorgesehen sein, dass das Überspannungsschutzgerät und das Überwachungsgerät in einem gemeinsamen Gehäuse untergebracht sind. Demnach bilden das Überspannungsschutzgerät und das Überwachungsgerät gemeinsam ein einzelnes Schutzgerät aus. Mit anderen Worten entspricht die Baugruppe dann dem Schutzgerät, das ein Gehäuse hat, welches sowohl das Überspannungsschutzgerät als auch das Überwachungsgerät umgibt.

Es kann also eine Aktion durchgeführt werden, wenn der degradationsrelevante Parameter einen Schwellenwert überschritten hat und/oder wenn der Lichtbogen erkannt worden ist, wie dies zuvor beschrieben wurde.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine schematische Übersicht einer erfindungsgemäßen Baugruppe mit einem erfindungsgemäßen Überwachungsgerät gemäß einer ersten Darstellung,
- Figur 2 eine weitere schematische Übersicht einer erfindungsgemäßen Baugruppe mit einem erfindungsgemäßen Überwachungsgerät gemäß einer zweiten Darstellung,
- Figur 3 eine untergeordnete Einheit des erfindungsgemäßen Überwachungsgeräts, die die Lichtbogenerkennungseinheit und die Funkenstrecke umfasst,
- Figur 4 eine erste Ausführungsform der untergeordneten Einheit aus Figur 3,
- Figur 5 eine zweite Ausführungsform der untergeordneten Einheit aus Figur 3,
- Figur 6 eine detaillierte Darstellung des erfindungsgemäßen Überwachungsgeräts bei der Verwendung in einer erfindungsgemäßen Baugruppe gemäß einer ersten Ausführungsform,
- Figur 7 eine detaillierte Darstellung des erfindungsgemäßen Überwachungsgeräts bei der Verwendung in einer erfindungsgemäßen Baugruppe gemäß einer zweiten Ausführungsform, und
- Figur 8 eine Übersicht des erfindungsgemäßen Verfahrens zur Überwachung eines Überspannungsschutzgeräts mittels eines Überwachungsgeräts.

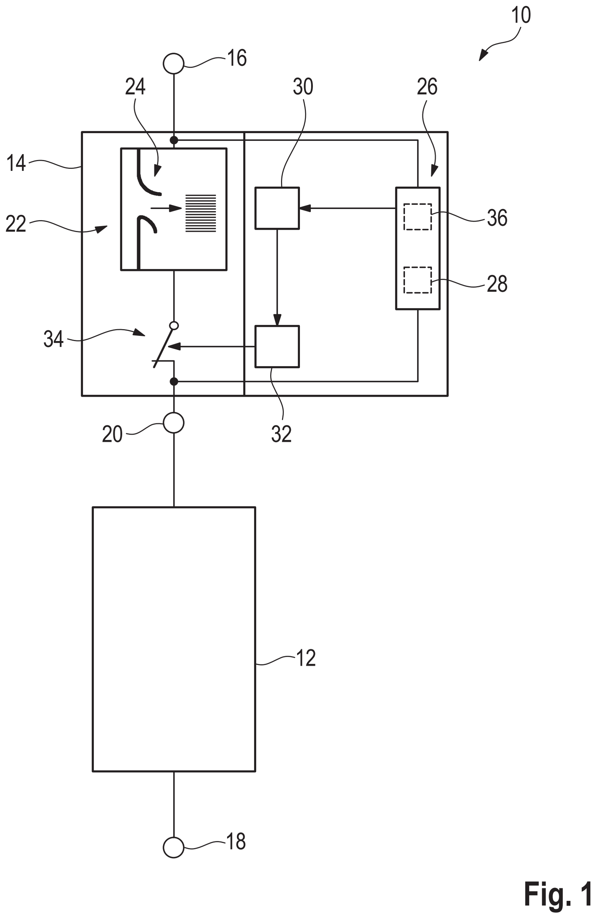

In Figur 1 ist eine Baugruppe 10 gezeigt, die ein Überspannungsschutzgerät 12 ("surge protection device" - SPD) sowie ein Überwachungsgerät 14 umfasst. Im gezeigten Ausführungsbeispiel sind das Überspannungsschutzgerät 12 und das Überwachungsgerät 14 als zwei separate Geräte gezeigt. Alternativ kann die Baugruppe 10 aber auch ein Gehäuse aufweisen, in dem das Überspannungsschutzgerät 12 und das Überwachungsgerät 14 aufgenommen sind. In dem Fall stellt die Baugruppe 10 also ein einzelnes Gerät dar, nämlich ein Schutzgerät.

Das Überwachungsgerät 14 ist über einen Eingang 16 an einer Phase bzw. Außenleiter (L) angeschlossen, wohingegen das Überspannungsschutzgerät 12 über einen Abgang 18 an einem Neutralleiter (N) oder einem Schutzleiter (PE) angeschlossen ist. Das Überwachungsgerät 14 weist einen Anschluss 20 auf, über den das Überwachungsgerät 14 mit dem Überspannungsschutzgerät 12 in Reihe geschaltet ist. Die Baugruppe 10 besteht also aus einer Reihenschaltung des Überwachungsgeräts 14 und des Überspannungsschutzgeräts 12, die zwischen der Phase bzw. Außenleiter (L) und dem Neutralleiter (N) oder dem Schutzleiter (PE) angeordnet ist.

Das Überwachungsgerät 14 weist einen Überlastschutz 22 auf, der eine Funkenstrecke 24 aufweist. Insofern handelt es sich bei dem Überlastschutz 22 um ein kurzschlussstromlöschfähiges und/oder überspannungsschaltendes Bauteil.

Darüber hinaus weist das Überwachungsgerät 14 eine Detektionsschaltung 26 auf, die eingerichtet ist, einen degradationsrelevanten Parameter des Überspannungsschutzgeräts 12 zu erfassen.

Hierzu ist die Detektionsschaltung 26 beispielsweise parallel zum Überlastschutz 22 angeordnet, wie aus Figur 1 hervorgeht. Die Detektionsschaltung 26 kann eine Messelektronik 28 aufweisen, die eingerichtet ist, den degradationsrelevanten Parameter zu erfassen.

Sollte das Überspannungsschutzgerät 12 degradiert sein, beispielsweise einen (altersbedingten) Verscheiß oder einen Defekt haben, so fließt ein Leckstrom durch das Überspannungsschutzgerät 12 und das hiermit in Serie verbundene Überwachungsgerät 14, insbesondere die Detektionsschaltung 26 des Überwachungsgeräts 12. Der Leckstrom kann den degradationsrelevanten Parameter darstellen, welcher von der Detektionsschaltung 26 erfasst wird, insbesondere der Messelektronik 28 der Detektionsschaltung 26.

Darüber hinaus umfasst das Überwachungsgerät 14 eine Lichtbogenerkennungseinheit 30, die der Funkenstrecke 24 zugeordnet ist, um einen eventuellen Lichtbogen entlang der Funkenstrecke 24 zu erkennen. Der Lichtbogen kann entstehen, wenn die Funkenstrecke 24 einem Impuls (8/20-Impuls) oder einem Blitzimpuls (10/350-Impuls) ausgesetzt ist oder ein Netzfolgestrom vorliegt.

Ferner weist das Überwachungsgerät 14 eine Abschalteinrichtung 32 auf, die in der gezeigten Ausführungsform direkt von der Lichtbogenerkennungseinheit 30 angesteuert werden kann und eingerichtet ist, das Überwachungsgerät 14 abzuschalten bzw. das Überspannungsschutzgerät 12 vom Überlastschutz 22 des Überwachungsgeräts 14 abzutrennen.

Die Abschalteinrichtung 32 kann hierzu, wie in der Ausführungsform nach Figur 1 gezeigt, eine Abtrennvorrichtung 34 umfassen, mit der das Überspannungsschutzgerät 12 vom Überlastschutz 22 des Überwachungsgeräts 14 abgetrennt werden kann.

Grundsätzlich kann auch vorgesehen sein, dass die Detektionsschaltung 26 die Abschalteinrichtung 32 ansteuert, insbesondere nachdem die Detektionsschaltung 26 eine Rückmeldung von der Lichtbogenerkennungseinheit 30 erhalten hat, wonach ein Lichtbogen erkannt worden ist. Die Detektionsschaltung 26 stellt dann die zentrale Elektronikeinheit des Überwachungsgeräts 14 dar.

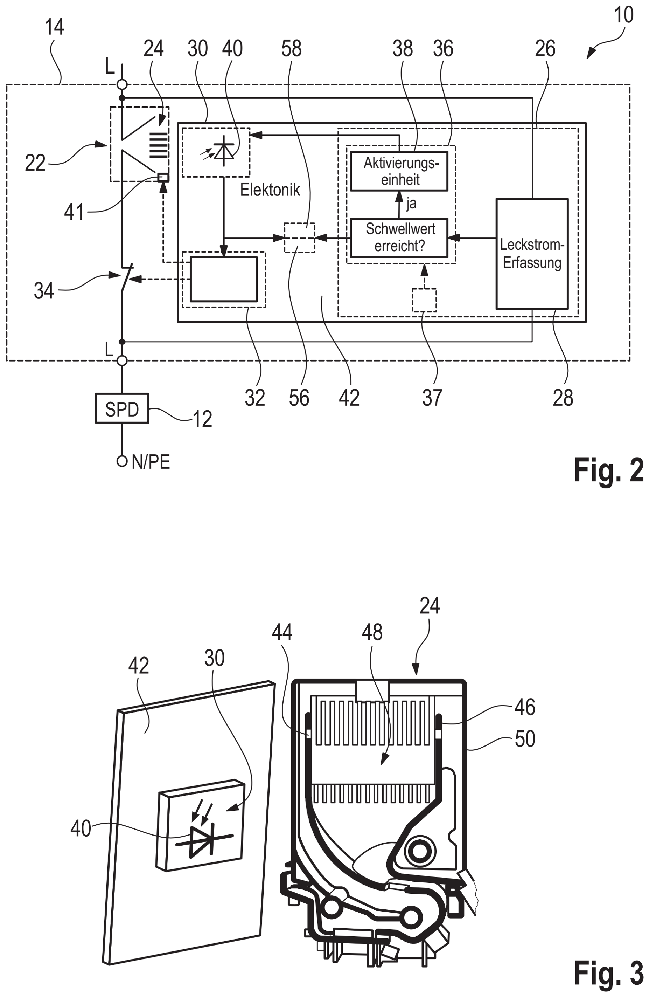

In Figur 2 ist die Baugruppe 10 detaillierter dargestellt, insbesondere die Detektionsschaltung 26.

Die Detektionsschaltung 26 umfasst eine Auswerteeinheit 36, die bspw. als ein Mikrocontroller (µC) ausgebildet ist.

Der erfasste degradationsrelevante Parameter wird an die Auswerteeinheit 36 übermittelt, die den degradationsrelevanten Parameter mit zumindest einem Schwellenwert vergleicht, der beispielsweise in einem Speicher 37 hinterlegt ist.

Sollte der Schwellenwert erreicht worden sein, so gibt die Auswerteeinheit 36 ein Aktivierungssignal an die Lichtbogenerkennungseinheit 30 aus, um diese zu aktivieren. Insofern umfasst die Auswerteeinheit 36 auch eine Aktivierungseinheit 38.

Die Lichtbogenerkennungseinheit 30, die eine Photodiode 40 umfasst, ist somit aktiviert, sodass ein auftretender Lichtbogen in der der Funkenstrecke 24 von der Photodiode 40 erkannt bzw. erfasst werden kann, was ein Erkennungssignal zur Folge hat.

Die Photodiode 40 ist typischerweise nichtleitend bzw. hochohmig, sodass lediglich beim Auftreten des Lichtbogens die Photodiode 40 in einen leitenden Zustand übergeht, also niederohmig wird, um das Erkennungssignal zu erzeugen bzw. weiterzuleiten.

Sollte die Lichtbogenerkennungseinheit 30 im Betrieb der Baugruppe 10 ein Lichtbogen in der Funkenstrecke 24 erkennen, so wird in der gezeigten Ausführungsform das Erkennungssignal an die Abschalteinrichtung 32 weitergeleitet. Alternativ kann die Lichtbogenerkennungseinheit 30 das Erkennungssignal an die Detektionsschaltung 26 ausgeben, die wiederum die Abschalteinrichtung 32 ansteuert.

Wie vorstehend bereits erläutert, kann die Abschalteinrichtung 32 die Abtrennvorrichtung 34 aufweisen, womit das Überspannungsschutzgerät 12 vom Überlastschutz 22 des Überwachungsgeräts 14 abgetrennt werden kann.

Zudem kann die Abschalteinrichtung 32 das Überwachungsgerät 14 abschalten. Das Abschalten des Überwachungsgeräts 14 kann in verschiedener Weise erfolgen, bspw. mittels eines Aktors 41 wie einem Elektroden-Aktor, einem Isolator-Aktor und/oder einem Trigger-Aktor. Der Aktor 41 hat einen Einfluss auf die Funkenstrecke 24, insbesondere das Ansprechverhalten der Funkenstrecke 24. Der Elektroden-Aktor kann die Position von zumindest einer Elektrode der Funkenstrecke 24 verändern, wohingegen der Isolator-Aktor einen Isolator einschieben kann, wodurch sich die Eigenschaften der Funkenstrecke 24 entsprechend verändern, was einem Abschalten des Überwachungsgeräts 14 entspricht. Ebenso kann der Trigger-Aktor eine Triggerelektrode einer Triggerschaltung herausfahren, wodurch die Triggerung der Funkenstrecke 24 nicht mehr erfolgen kann, was ebenfalls einem Abschalten des Überwachungsgeräts 14 entspricht.

Grundsätzlich kann die Detektionsschaltung 26, die Lichtbogenerkennungseinheit 30 und/oder die Abschalteinrichtung 32 auf einer Platine 42 angeordnet sein, die demnach die Elektronik des Überwachungsgeräts 14 umfassen kann.

In Figur 3 ist beispielhaft gezeigt, dass die Platine 42 die Lichtbogenerkennungseinheit 30 umfasst, insbesondere die Photodiode 40.

Die Lichtbogenerkennungseinheit 30 wird in Bezug auf die in Figur 3 ebenfalls dargestellte Funkenstrecke 24 derart positioniert, dass die Photodiode 40 einen entstehenden Lichtbogen bei der Funkenstrecke 24 erkennen kann.

Wie aus Figur 3 deutlich wird, umfasst die Funkenstrecke 24 zwei Elektroden 44, 46, die voneinander beabstandet sind, sodass sich ein Lichtbogen zwischen den beiden Elektroden 44, 46 ausbilden kann. Zudem ist eine Löschkammer 48 vorgesehen, in die der Lichtbogen einlaufen kann, um dort gelöscht zu werden.

Die Elektroden 44, 46 sowie die Löschkammer 48 sind in einem Gehäuse 50 angeordnet, welches demnach die Funkenstrecke 24 umgibt.

Der Lichtbogen wird von der Lichtbogenerkennungseinheit 30 erfasst, insbesondere der Photodiode 40, wodurch die Abschalteinrichtung 32 (direkt oder indirekt über die Detektionsschaltung 26) angesteuert wird, um das Überwachungsgerät 14 abzuschalten und/oder das Überspannungsschutzgerät 12 vom Überlastschutz 22 des Überwachungsgeräts 14 abzutrennen.

Grundsätzlich kann die Lichtbogenerkennungseinheit 30 in Bezug auf das Gehäuse 50, welches die Funkenstrecke 24 umgibt, in unterschiedlicher Weise angeordnet sein.

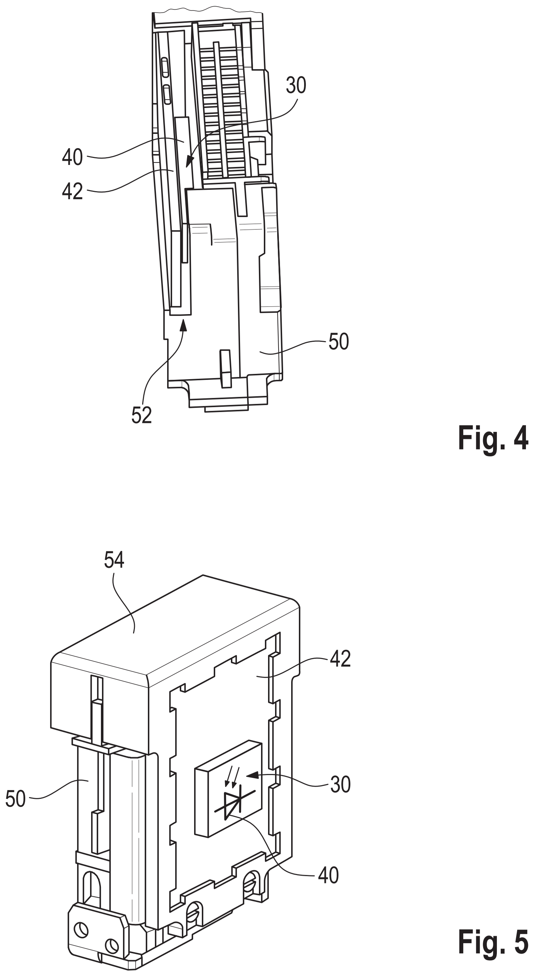

In Figur 4 ist gezeigt, dass das Gehäuse 50 eine Aufnahme 52 für die Platine 42 aufweist, auf der zumindest die Lichtbogenerkennungseinheit 30 vorgesehen ist. Die Lichtbogenerkennungseinheit 30 wird also in dem Gehäuse 50 angeordnet.

In Figur 5 ist wiederum eine alternative Ausführungsform gezeigt, bei der die Lichtbogenerkennungseinheit 30 über einen Adapter 54 außenseitig an Gehäuse 50 angeordnet ist. Der Adapter 54 weist eine entsprechende Halterung für die Platine 42 der Lichtbogenerkennungseinheit 30 auf.

Die Lichtbogenerkennungseinheit 30 ist demnach in der Lage, den innerhalb des Gehäuses 50 entstehenden Lichtbogen auch durch das Gehäusematerial des Gehäuses 50 zu erkennen. Hierzu kann ein Sichtfenster im Gehäuse 50 oder ein Bereich mit einem verringerten Gehäusematerial vorgesehen sein, dem die Photodiode 40 zugeordnet ist.

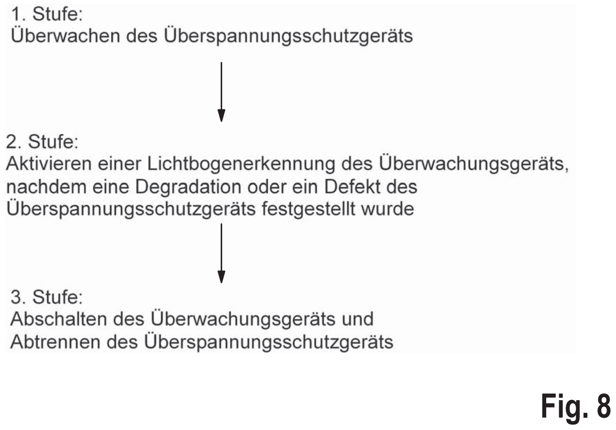

Grundsätzlich sieht die Überwachung des Überspannungsschutzgeräts 12 mittels des Überwachungsgeräts 14 eine dreistufige Überwachung vor, wie aus Figur 8 hervorgeht.

In einer ersten Stufe wird das Überspannungsschutzgerät 12 permanent durch das Überwachungsgerät 14 überwacht. Dies bedeutet, dass der degradationsrelevante Parameter von der Detektionsschaltung 26 kontinuierlich erfasst wird. Insbesondere wird der erfasste degradationsrelevante Parameter kontinuierlich mit dem wenigstens einen Schwellenwert verglichen, um festzustellen, ob der Schwellenwert erreicht worden ist oder nicht.

Sollte der Schwellenwert erreicht worden sein, so ist das Überspannungsschutzgerät 12 nicht mehr vollständig funktionsfähig, weswegen eine zweite Stufe der Überwachung aktiviert wird.

Die zweite Stufe zeichnet sich dadurch aus, dass die Lichtbogenerkennungseinheit 30 aktiviert wird, also erst nachdem eine Degradation des Überspannungsschutzgeräts 12 festgestellt worden ist, was mit dem Erreichen des wenigstens einen Schwellenwerts einhergeht.

Da die Lichtbogenerkennungseinheit 30 aktiviert worden ist, kann ein in der Funkenstrecke 24 entstehender Lichtbogen nunmehr erkannt werden. Dies ist dann der Fall, wenn eine Überspannung auftritt, beispielsweise aufgrund eines Impulses oder eines Blitzimpulses, oder wenn ein Netzfolgestrom vorliegt.

Das Erkennen des Lichtbogens während der zweiten Stufe hat zur Folge, dass die dritte Stufe aktiviert wird, bei der das Überspannungsschutzgerät 12 abgetrennt wird und/oder das Überwachungsgerät 14 abgeschaltet wird. Hierzu kann die Abschalteinrichtung 32 angesteuert werden, beispielsweise ein entsprechender Aktor 31. Das Überwachungsgerät 14 weist dann nur noch eine Notlaufeigenschaft auf, beispielsweise eine Folgestromlöschfähigkeit.

In Figur 2 ist ferner gezeigt, dass das Überwachungsgerät 14 eine Statusanzeige 56 aufweist, die eingerichtet ist, den Status des Überspannungsschutzgeräts 12 und/oder den Status des Überwachungsgeräts 14 anzuzeigen.

Mit anderen Worten kann angezeigt werden, welche Stufe der Überwachung gerade vorliegt, also die erste Stufe, die zweite Stufe oder die dritte Stufe. Insbesondere kann in der zweiten Stufe auch der Degradationsgrad des Überspannungsschutzgeräts 12 angezeigt werden, sofern der degradationsrelevante Parameter einen entsprechenden Schwellenwert erreicht hat. Hierdurch wird der Benutzer entsprechend informiert, dass das Überspannungsschutzgerät 12 gealtert bzw. defekt ist, sodass ein Überspannungsschutz (nur noch oder hauptsächlich) vom Überwachungsgerät 14 gewährleistet wird, insbesondere dem Überlastschutz 22.

Auch kann angezeigt werden, wenn die dritte Stufe aktiviert worden ist, also das Überwachungsgerät 14 abgeschaltet bzw. das Überspannungsschutzgerät 12 abgetrennt worden ist, sodass nur noch eine Notlaufeigenschaft gegeben ist, beispielsweise eine Folgestromlöschfähigkeit.

Der Benutzer der Baugruppe 10 ist also auch hierüber entsprechend informiert.

Alternativ oder ergänzend kann die Information über eine Kommunikationsschnittstelle 58 ausgegeben werden, sodass die Information auch an einem anderen Ort zur Verfügung steht, insbesondere an einer Leitstelle.

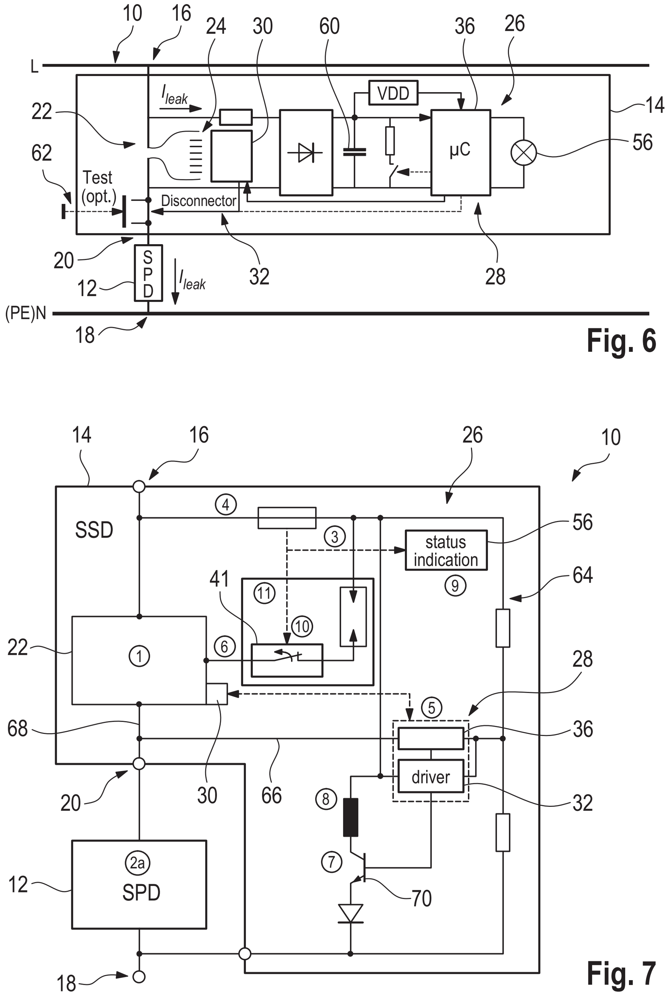

In Figur 6 ist eine beispielhafte Ausgestaltung des Überwachungsgeräts 14 gezeigt, bei die Detektionsschaltung 26 gemäß einer ersten Ausführungsform detailliert gezeigt ist.

Die Detektionsschaltung 26 umfasst zumindest einen Messkondensator 60 mit einer Messkapazität, der mit dem Überspannungsschutzgerät 12 in Serie geschaltet ist.

Der über die Detektionsschaltung 26 geleitete Leckstrom lädt somit den Messkondensator 60 auf, wodurch eine Spannung am Messkondensator 60 anliegt, die von einem elektrischen Innenwiderstand des Überspannungsschutzgeräts 12 abhängt, welcher wiederum mit dem Degradationsgrad des Überspannungsschutzgeräts 12 zusammenhängt. Der Wert des elektrischen Innenwiderstands des Überspannungsschutzgeräts 12 sinkt beispielsweise mit zunehmender Degradation des Überspannungsschutzgeräts 12.

Durch Auswerten der am Messkondensator 60 anliegenden Spannung kann also auf den Degenerationsgrad des Überspannungsschutzgeräts 12 rückgeschlossen werden.

Die Detektionsschaltung 26 weist hierzu eine Messelektronik 28 bzw. eine Auswerteeinheit 36 auf, um den degradationsrelevanten Parameter zu erfassen, beispielsweise die an dem Messkondensator 60 anliegende Spannung, und auszuwerten, um eine Degradation des Überspannschutzgeräts 12 zu bestimmen.

Ferner ist in der Ausführungsform gemäß Figur 6 gezeigt, dass das Überwachungsgerät 14 optional eine manuelle Überbrückung 62 aufweist, beispielsweise in Form eines Tastelements, welche eingerichtet ist, eine von der Abtrennvorrichtung 34 unterbrochene Leitung zu überbrücken, sodass es dennoch möglich ist, den vorliegenden Leckstrom des Überspannungsschutzgeräts 12 (kurzzeitig) zu erfassen. Der Leckstrom kann also gemessen werden, auch wenn die dritte Stufe der Überwachung aktiviert worden ist, was eine automatische Abtrennung des Überspannschutzgeräts 12 vom Überlastschutz 22 des Überwachungsgeräts 14 zur Folge hat.

Alternativ kann bei der in Figur 6 gezeigten Ausführungsform vorgesehen sein, dass das Überwachungsgerät 14 anstatt der an der Messkondensator 60 anliegenden Spannung als degradationsrelevanten Parameter eine Oszillatorfrequenz verwendet, um den Degradationsgrad des Überspannungsschutzgeräts 12 zu ermitteln.

Hierzu kann ein den Messkondensator 60 umfassender Schwingkreis (RC-Glied) mittels einer Kippschaltung in Schwingung versetzt werden, wobei die sich einstellende Oszillatorfrequenz ausgewertet wird, um Rückschlüsse auf den Degradationsgrad des Überspannungsschutzgeräts 12 zu erhalten.

In Figur 7 ist eine weitere Ausführungsform gezeigt, bei der der degradationsrelevante Parameter mittels eines Spannungsabfalls ermittelt wird, insbesondere mittels eines Spannungsabfalls über den Überlastschutz 22 und/oder eines Spannungsabfalls über das Überspannungsschutzgerät 12.

Hierzu umfasst das Überwachungsgerät 14 eine Brückenschaltung 64, die einen Abgriff 66 aufweist, welcher von einer Leitung 68, die den Überlastschutz 22 mit dem Anschluss 20 verbindet, zu der Auswerteeinheit 36 führt, die über die Brückenschaltung 28 mit dem als Eingang dienenden Anschluss 16 sowie dem als Abgang dienenden Anschluss 18 in Verbindung steht. Die Auswerteeinheit 36 kann mittels der Brückenschaltung 64 eine Spannungsaufteilung über die Reihenschaltung von Überlastschutz 22 und dem Überspannungsschutzgerät 12 erfassen und auswerten, was den degradationsrelevanten Parameter darstellt.

Dabei kann die Auswerteeinheit 36 den entsprechend detektierten Spannungsabfall mit einem zugeordneten Schwellenwert vergleichen, um festzustellen, ob der vordefinierte Schwellenwert erreicht worden ist, um die zweite Stufe zu aktivieren, wie zuvor erläutert, also die Lichtbogenerkennungseinheit 30 zu aktivieren.

Sollte die Lichtbogenerkennungseinheit 30 nach ihrer Aktivierung einen Lichtbogen detektieren, so wird die dritte Stufe aktiviert, bei der die Abschalteinrichtung 32 angesteuert wird, die vorliegend einen Schalter 70 ansteuert, wodurch ein Strompfad aktiviert wird. Sollte über den aktivierten Strompfad ein Strom fließen, so kann der Aktor 41 entsprechend angesteuert werden, um zumindest das Überwachungsgerät 14 abzuschalten.

Wie vorliegend bereits erläutert, kann der jeweilige Status bzw. die Überwachungsstufe über die Statusanzeige 56 angezeigt werden. Alternativ oder ergänzend kann die entsprechende Information über die Kommunikationsschnittstelle übermittelt werden.

Grundsätzlich ist sichergestellt, dass die Veränderung des degradationsrelevanten Parameters, also der veränderte Leckstrom bzw. der veränderte Spannungsabfall, derart zeitlich vom Überwachungsgerät 14 erkannt wird, dass ein Benutzer in der Lage ist, das Überspannungsschutzgerät 12 auszutauschen, bevor eine mit dem Überspannungsschutzgerät 12 geschützte elektrische Anlage ohne Überspannungsschutz betrieben werden muss.

## Patentansprüche

1. Überwachungsgerät (14) zur Überwachung eines Überspannungsschutzgeräts (12), wobei das Überwachungsgerät (14) einen Anschluss (20) zum In-Reihe-Schalten mit dem Überspannungsschutzgerät (12) aufweist, wobei das Überwachungsgerät (14) einen Überlastschutz (22) hat, der eine Funkenstrecke (24) umfasst, wobei das Überwachungsgerät (14) eine Detektionsschaltung (26) aufweist, die eingerichtet ist, einen degradationsrelevanten Parameter zu erfassen, und wobei das Überwachungsgerät (14) eine Lichtbogenerkennungseinheit (30) aufweist, die der Funkenstrecke (24) des Überlastschutzes (22) zugeordnet und eingerichtet ist, einen Lichtbogen zu erkennen.

2. Überwachungsgerät (14) nach Anspruch 1, **dadurch gekennzeichnet, dass** die Detektionsschaltung (26) eingerichtet ist, die Lichtbogenerkennungseinheit (30) zu aktivieren, nachdem der degradationsrelevante Parameter einen Schwellenwert erreicht hat.

3. Überwachungsgerät (14) nach Anspruch 1 oder 2, **dadurch gekennzeichnet, dass** das Überwachungsgerät (14) eine Abschalteinrichtung (32) aufweist, die von der Detektionsschaltung (26) und/oder der Lichtbogenerkennungseinheit (30) ansteuerbar ist, insbesondere nachdem die Lichtbogenerkennungseinheit (30) einen Lichtbogen erkannt hat.

4. Überwachungsgerät (14) nach Anspruch 3, **dadurch gekennzeichnet, dass** die Abschalteinrichtung (32) eine Abtrennvorrichtung (34), einen Elektroden-Aktor, einen Isolator-Aktor und/oder einen Trigger-Aktor umfasst.

5. Überwachungsgerät (14) nach einem der vorhergehenden Ansprüche, **dadurch gekennzeichnet, dass** die Lichtbogenerkennungseinheit (30) eine Photodiode (40) aufweist, die bei der Detektion eines Lichtbogens in einen elektrisch leitenden Zustand übergeht.

6. Überwachungsgerät (14) nach einem der vorhergehenden Ansprüche, **dadurch gekennzeichnet, dass** die Lichtbogenerkennungseinheit (30) auf einer Platine (42) angeordnet ist, die in einer Aufnahme (52) eines Gehäuses (50) aufgenommen ist, das die Funkenstrecke (24) umgibt, oder über einen Adapter (54) außenseitig an einem Gehäuse (50) angeordnet ist, das die Funkenstrecke (24) umgibt.

7. Überwachungsgerät (14) nach einem der vorhergehenden Ansprüche, **dadurch gekennzeichnet, dass** die Lichtbogenerkennungseinheit (30) galvanisch vom Überlastschutz (22) getrennt ist.

8. Überwachungsgerät (14) nach einem der vorhergehenden Ansprüche, **dadurch gekennzeichnet, dass** das Überwachungsgerät (14) eine Statusanzeige (56) und/oder eine Kommunikationsschnittstelle (58) aufweist.

9. Überwachungsgerät (14) nach einem der vorhergehenden Ansprüche, **dadurch gekennzeichnet, dass** die Detektionsschaltung (26) parallel zum Überlastschutz (22) geschaltet ist, wobei die Detektionsschaltung (26) eine Messelektronik (28) umfasst, die eingerichtet ist, den degradationsrelevanten Parameter zu erfassen, insbesondere wobei die Detektionsschaltung (26) zumindest einen Messkondensator (60) mit einer Messkapazität umfasst, der mit dem Überspannungsschutzgerät (12) in Serie schaltbar ist.

10. Überwachungsgerät (14) nach einem der vorhergehenden Ansprüche, **dadurch gekennzeichnet, dass** die Detektionsschaltung (26) eine Auswerteeinheit (36) aufweist, die mit einer Leitung (68) zwischen dem Überlastschutz (22) und dem Anschluss (20) verbunden ist, um einen Spannungsabfall über den Überlastschutz (22) zu erfassen und auszuwerten, um den degradationsrelevanten Parameter zu erfassen.

11. Baugruppe (10) mit einem Überspannungsschutzgerät (12) und einem Überwachungsgerät (14) nach einem der vorhergehenden Ansprüche, wobei das Überspannungsschutzgerät (12) und das Überwachungsgerät (14) in Serie geschaltet sind.

12. Verfahren zur Überwachung eines Überspannungsschutzgeräts (12) mittels eines Überwachungsgeräts (14), mit den Schritten:
- Erfassen eines degradationsrelevanten Parameters, um eine Alterung und/oder einen Defekt des Überspannungsschutzgeräts (12) zu detektieren, und
- Erkennen eines Lichtbogens in einer Funkenstrecke (24) eines Überlastschutzes des Überwachungsgeräts (14).

13. Verfahren nach Anspruch 12, **dadurch gekennzeichnet, dass** eine Aktion durchgeführt wird, wenn der degradationsrelevante Parameter einen Schwellenwert überschritten hat und/oder wenn der Lichtbogen erkannt worden ist.

14. Verfahren nach Anspruch 12 oder 13, **dadurch gekennzeichnet, dass** eine Lichtbogenerkennungseinheit (30) zum Erkennen des Lichtbogens nur aktiviert wird, wenn der degradationsrelevante Parameter einen Schwellenwert überschritten hat.

15. Verfahren nach einem der Ansprüche 12 bis 14, **dadurch gekennzeichnet, dass** ein Status des Überspannungsschutzgeräts (12) und/oder ein Status des Überwachungsgeräts (14) angezeigt werden bzw. wird und/oder dass das Überwachungsgerät (14) abgeschaltet und/oder das Überspannungsschutzgerät (12) abgetrennt werden bzw. wird, wenn der Lichtbogen erkannt worden ist.
